# EUROPÄISCHE PATENTSCHRIFT

(11) **EP 3 062 490 B1**
(45) Veröffentlichungstag und Bekanntmachung des Hinweises auf die Patenterteilung: **18.07.2018**
(21) Anmeldenummer: 15156972.0
(22) Anmeldetag: 27.02.2015
(51) Int. Cl.: H04L 29/12, H04L 29/08

(54) **Verfahren zur Datenübermittlung innerhalb eines industriellen Automatisierungssystems und Kommunikationsgerät**
Method for transmitting data within an industrial automation system and communication device
Procédé destiné à la transmission de données dans un système d'automatisation industriel et appareil de communication

(43) Veröffentlichungstag der Anmeldung: 31.08.2016
(73) Patentinhaber: Siemens Aktiengesellschaft, 80333 München (DE)
(72) Erfinder: Albrecht, Harald, 90475 Nürnberg (DE); Talanis, Thomas, 91336 Heroldsbach (DE)

(56) Entgegenhaltungen:
- US-A1- 2004 001 509
- US-B1- 7 333 510
- BAGNULO UC3M P MATTHEWS ALCATEL-LUCENT I VAN BEIJNUM IMDEA NETWORKS M: "Stateful NAT64: Network Address and Protocol Translation from IPv6 Clients to IPv4 Servers; rfc6146.txt", STATEFUL NAT64: NETWORK ADDRESS AND PROTOCOL TRANSLATION FROM IPV6 CLIENTS TO IPV4 SERVERS; RFC6146.TXT, INTERNET ENGINEERING TASK FORCE, IETF; STANDARD, INTERNET SOCIETY (ISOC) 4, RUE DES FALAISES CH- 1205 GENEVA, SWITZERLAND, 27. April 2011 (2011-04-27), Seiten 1-45, XP015075988, [gefunden am 2011-04-27]

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In EP 1 770 458 A2 ist ein industrielles Automatisierungssystem mit zumindest einer speicherprogrammierbaren Steuerungseinheit beschrieben, bei dem eine Konfigurationseinheit zur Konfiguration der Steuerungseinheit und zur Bekanntgabe ihrer Verfügbarkeit an einem Kommunikationsnetz vorgesehen ist. Die Konfigurationseinheit weist der Steuerungseinheit dabei eine eindeutige Kommunikationsnetzadresse zu, die beispielsweise eine IPv6-Adresse sein kann. Auf diese Weise kann die Steuerungseinheit automatisch in Betrieb genommen werden.

Aus EP 2 955 904 B1 ist ein Verfahren zur Vergabe von Kommunikationsnetzadressen für Netzteilnehmer eines segmentierten Netzes mit mehreren Subnetzen bekannt. Die Subnetze sind jeweils über einen Subnetz-Router an ein sie verbindendes Sammelnetz angeschlossen. Dabei wird von den Subnetz-Routern durch einen Austausch von über das Sammelnetz verteilten Router-Nachrichten dezentral ein gemeinsamer Adressbereich ermittelt, und innerhalb des Adressbereichs werden Kommunikationsnetzadressen für die Netzteilnehmer festgelegt.

In Internet Engineering Task Force (IETF), Request for Comments (RFC) 6145 und 6146, ISSN 2070-1721, April 2011 (siehe http://www.rfc-base.org/txt/rfc-6145.txt und http://www.rfc-base.org/txt/rfc-6146.txt) ist eine Umsetzung von Transmission Control Protocol (TCP)- und User Datagram Protocol (UDP) Kommunikationsverbindungen, die auf Internet Protocol, Version 6 (IPv6) basieren, auf Internet Protocol, Version 4 (IPv4) basierte Kommunikationsverbindungen beschrieben. Eine derartige Umsetzung wird dabei als NAT64 (Network Address Translation) bezeichnet. Mittels NAT können IPv6-basierte Kommunikationsgeräte auf IPv4-basierte Kommunikationsgeräte zugreifen, indem insbesondere eine Adressformatanpassung vorgenommen wird. Im Rahmen von NAT64 nutzen IPv6-Kommunikationsgeräte für einen Zugriff auf IPv4-Kommunikationsgeräte virtuelle IPv6-Adressen, die mittels eines NAT64-Servers durch den IPv4-Kommunikationsgeräten zugeordnete IPv4-Adressen ersetzt werden. In analoger Weise werden Kommunikationsnetzadressen für Rückkanäle von IPv4-Kommunikationsgeräten zu IPv6-kommunikationsgeräten umgesetzt.

Darüber hinaus ist aus IETF, RFC 6147 (siehe http://www.rfc-base.org/txt/rfc-6147.txt) bekannt, in einem Domain Name System (DNS) aus IPv4-Adresseinträgen, die als A Resource Records (RR) bezeichnet werden, zugeordnete IPv6-Adresseinträge (AAAA Resource Records) zu berechnen und diese durch DNS-Server bereitzustellen. Eine Ableitung von AAAA Resource Records aus A Records kann grundsätzlich manuell durch einen DNS-Administrator durchgeführt, mittels einer IP Adress Management (IPAM) Lösung projektiert oder mittels DNS64-Servern laufend automatisch ermittelt werden.

Aus US 7 333 510 B1 ist ein Kommunikationssystem bekannt, das ein erstes IPv6-basiertes Teilnetz 202, ein zweites IPv4-basiertes Teilnetz und ein drittes IPv4-basiertes Teilnetz umfasst. Jedes Teilnetz umfasst jeweils einen DNS-Server und mehrere IPv6 - bzw. IPv4-basierte Kommunikationsgeräte. In den DNS-Servern werden jeweils Teilnetz-individuell Gerätename-Adress-Zuordnungen für die vom jeweiligen Teilnetz umfassten Kommunikationsgeräte erfasst. Die drei Teilnetze sind über einen Router mit integrierter NAT-Einheit miteinander verbunden. Kann eine Namensauflösungsanfrage eines anfragenden Kommunikationsgeräts zur Ermittlung einer Adresse eines gesuchten Kommunikationsgeräts durch den DNS-Server innerhalb seines Teilnetzes nicht aufgelöst werden, so wird die Namensauflösungsanfrage über den Router an die DNS-Server der übrigen Teilnetze weitergeleitet. Eine die Adresse des gesuchten Kommunikationsgeräts umfassende Antwort auf die Namensauflösungsanfrage wird durch den DNS-Server im Teilnetz des gesuchten Kommunikationsgeräts zunächst an den Router übermittelt. Falls das anfragende Kommunikationsgerät auf einer anderen IP-Version basiert als das gesuchte Kommunikationsgerät, wird durch die NAT-Einheit des Routers eine IPv4-Adresse in eine IPv6-Adresse bzw. umgekehrt umgewandelt. Die Antwort auf die Namensauflösungsanfrage wird abschließend mit der ggf. umgewandelten Adresse durch den Router an das anfragende Kommunikationsgerät übermittelt.

In US 2004/001509 A1 ist eine Umwandlung zwischen IPv4-Adressen und IPv6-Adressen beschrieben, wobei eine Nutzung eines Application Level Gateways in einer NAT-Einheit vermieden wird, um eine Sitzung zwischen einem IPv4-Netzknoten und einem IPv6-Netzknoten aufzubauen. Hierzu wird aus einem Vorrat verfügbarer IPv4-Adresse eine temporäre IPv4-Adresse ausgewählt. Die ausgewählte temporäre IPv4-Adresse wird in einen Nutzdatenbereich eines IPv6-Datenpakets eingefügt und die-ses IPv6-Datenpaket von einem IPv6-Quell-Netzknoten an einen IPv4-Ziel-Netzknoten übermittelt. In einer NAT-Einheit wird die temporäre IPv4-Adresse aus dem Nutzdatenbereich des IPv6-Datenpakets entnommen und die IPv6-Quell-Adresse zur Bildung eines IPv4-Datenpakets durch die temporäre IPv4-Adresse ersetzt. Nach Ersetzung der IPv6-Quell-Adresse durch die temporäre IPv4-Adresse erfolgt eine Übermittlung des IPv4-Daten-pakets von der NAT-Einheit an den IPv4-Zielnetzknoten.

Der vorliegenden Erfindung liegt daher die Aufgabe zugrunde, ein Verfahren zum Datenübermittlung innerhalb eines industriellen Automatisierungssystems zu schaffen, das eine zuverlässige und kostengünstig zu realisierende Nutzung bestehender IPv4-basierter Automatisierungsgeräte durch IPv6-basierte Komponenten eines industriellen Automatisierungssystems ermöglicht, sowie eine geeignete Vorrichtung zu dessen Durchführung anzugeben.

Diese Aufgabe wird erfindungsgemäß durch ein Verfahren mit den in Anspruch 1 angegebenen Merkmalen und durch ein Steuerungsgerät mit den in Anspruch 15 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Datenübermittlung innerhalb eines industriellen Automatisierungssystems, das mehrere Zellen mit jeweils einer Gruppe von ausschließlich IPv4-basierte Kommunikationsgeräte umfassenden Automatisierungsgeräten und jeweils einem Teilnetz-Steuerungsgerät umfasst, erfasst eine Namens- oder Konfigurationsdienstkomponente des Teilnetz-Steuerungsgeräts für die Gruppe von Automatisierungsgeräten IPv4-Adressen und zugeordnete Gerätenamen. Das Teilnetz-Steuerungsgerät ist über ein Zell-individuelles Teilnetz mit den Automatisierungsgeräten verbunden und steuert bzw. überwacht diese. Bei ausschließlich IPv4-basierten Kommunikationsgeräten erfolgt eine Datenübermittlung auf Vermittlungsebene nur unter Verwendung von IPv4-Adressen. Das Teilnetz-Steuerungsgerät berechnet für die Gruppe von Automatisierungsgeräten aus einem dem Teilnetz zugeordneten IPv6-Präfix und den IPv4-Adressen der Automatisierungsgeräte jeweils eine IPv6-Adresse.

Erfindungsgemäß fordert ein Namensdienst-Agent des Teilnetz-Steuerungsgeräts für die jeweilige Gruppe von Automatisierungsgeräten eine Erfassung der berechneten IPv6-Adressen und der zugeordneten Gerätenamen in zumindest einem übergeordneten Namensdienst-Server des industriellen Automatisierungssystems an. Die berechneten IPv6-Adressen und die zugeordneten Gerätenamen werden bei einer erfolgreichen Anforderung im übergeordneten Namensdienst-Server gespeichert. Für die Gruppe von Automatisierungsgeräten werden aus den IPv4-Adressen der Automatisierungsgeräte und den berechneten IPv6-Adressen Adressumsetzungsregeln ermittelt. Die ermittelten Adressumsetzungsregeln werden durch eine Adressumsetzungseinheit des Teilnetz-Steuerungsgeräts für eine Adressumsetzung zwischen IPv4-Adressen und IPv6-Adressen angewendet. Mittels einer derartigen adaptiven Adressumsetzung können auch bei Änderungen, wie geänderte Präfixe oder neue Geräte, virtuelle IPv6-Adressen für bestehende IPv4-Kommunikationsgeräte zuverlässig berechnet werden, so dass deren Weiterbetrieb auch in einer IPv6-Umgebung gewährleistet werden kann.

Jeder Zelle ist entsprechend einer Weiterbildung des erfindungsgemäßen Verfahrens zumindest ein individuelles IPv6-Präfix zugeordnet. In diesem Zusammenhang können für bestehende Zellen projektierte IPv4-Adressen problemlos übernommen werden, ohne dass es zu Überschneidungen mit Gerätadressen aus anderen Zellen kommt. Dies ist insbesondere bei Serienmaschinen bzw. einer Vielzahl im wesentlichen identischer Zellen äußerst wichtig.

Entsprechend einer vorteilhaften Ausgestaltung der vorliegenden Erfindung umfasst das Teilnetz-Steuerungsgerät eine Namensdienstkomponente eines konfigurationslosen Namensdienstes. Dabei erfasst die Namensdienstkomponente des Teilnetz-Steuerungsgeräts für die Gruppe von Automatisierungsgeräten, die durch das Teilnetz-Steuerungsgerät gesteuert bzw. überwacht werden, IPv4-Adressen und zugeordnete Gerätenamen entsprechend einem Namensauflösungsprotokoll. Vorzugsweise werden die IPv4-Adressen und die zugeordneten Gerätenamen für die jeweilige Gruppe von Automatisierungsgeräten durch die Namensdienstkomponente des Teilnetz-Steuerungsgeräts entsprechend Discovery and Configuration Protocol oder multicast Domain Name System Protocol erfasst. Auf diese Weise kann vorliegende Erfindung mit relativ geringem Aufwand zuverlässig realisiert werden.

Entsprechend einer anderen vorteilhaften Ausgestaltung des erfindungsgemäßen Verfahrens erfasst die Konfigurationsdienstkomponente des Teilnetz-Steuerungsgeräts Gerätenamen entsprechend Dynamic Host Control Protocol, Version 4, Option 61 mittels eines jeweils Kommunikationsgerätseitig spezifizierten DHCP Client Identifier. Auf diese Weise kann das erfindungsgemäße Verfahren auch in EtherNet/IP-Systemen bzw. basierend auf Common Industrial Protocol genutzt werden.

Vorzugsweise wird eine IPv6-Adresse aus einem zum Teilnetz zugeordneten IPv6-Präfix und einer IPv4-Adresse jeweils nur für Kommunikationsgeräte berechnet wird, die jeweils eine Vermittlungsfunktionseinheit aufweisen, die nur zur Verarbeitung eines IPv4-Internetprotokollstapels ausgestaltet und eingerichtet ist. Zur Berechnung einer jeweiligen IPv6-Adresse kann jeweils ein Schnittstellenidentifikator gebildet werden, dessen oberste 32 Bit einen einstellbaren Wert aufweisen und dessen unterste 32 Bit aus der jeweiligen IPv4-Adresse gebildet werden. Darüber hinaus kann das Teilnetz ein separates zugeordnetes IPv6-Präfix aufweisen, das nur für aus IPv4-Adressen berechnete IPv6-Adressen verwendet wird. Auf diese Weise kann schnell und zuverlässig erkannt werden, für welche Geräte eine Adressumsetzung erforderlich ist.

Entsprechend einer besonders bevorzugten Ausgestaltung der vorliegenden Erfindung ist das dem Teilnetz für eine Berechnung von IPv6-Adressen aus IPv4-Adressen zugeordnete IPv6-Präfix ein off-link Präfix. Dagegen werden on-link bzw. Link-lokale Präfixe üblicherweise zur Identifizierung von Geräten verwendet, die durch andere Geräte innerhalb eines lokalen Teilnetzes ohne Router erreichbar sind. Vorteilhafterweise sind Link-lokale Präfixe bei einer Berechnung von IPv6-Adressen aus IPv4-Adressen ausgeschlossen.

Der übergeordnete Namensdienst-Server kann insbesondere ein Domain Name System Server sein, der einen Namensdienst an DNS-Clients von IPv6-basierten Kommunikationsgeräten bereitstellt. Vorzugsweise umfasst der Namensdienst-Agent einen Client für dynamisches DNS, mittels dessen eine Speicherung einer Zuordnung von aus IPv4-Adressen berechneten IPv6-Adressen und zugeordneten Gerätenamen im übergeordneten Namensdienst-Server anfordert wird. Auf diese Weise kann vorliegende Erfindung durch Rückgriff auf grundsätzlich vorhandene Komponenten realisiert werden.

Entsprechend einer besonders vorteilhaften Ausgestaltung der vorliegenden Erfindung ist die Adressumsetzungseinheit in einen Router integriert ist, der eine erste Vermittlungsfunktionseinheit zur Verarbeitung eines IPv4-Internetprotokollstapels und eine zweite Vermittlungsfunktionseinheit zur Verarbeitung eines IPv6-Internetprotokollstapels aufweist. Jede Vermittlungsfunktionseinheit kann über einen Kommunikationsnetzadapter-Treiber auf einen Kommunikationsnetzadapter eines Teilnetz-Steuerungsgeräts zugreifen. Außerdem kann jeder Kommunikationsnetzadapter eine Sende- und Empfangseinheit und eine Steuerungseinheit zur Koordination eines Zugriffs auf ein Kommunikationsmedium umfassen. Darüber hinaus umfasst das Teilnetz-Steuerungsgerät vorzugsweise den Router mit integrierter Adressumsetzungseinheit. Dabei ist das Teilnetz-Steuerungsgerät über einen ersten Kommunikationsnetzadapter mit der Gruppe von Kommunikationsgeräten innerhalb seines Teilnetzes verbunden. Über einen zweiten Kommunikationsnetzadapter ist das Teilnetz-Steuerungsgerät mit dem übergeordneten Namensdienst-Server verbunden.

Das erfindungsgemäße Steuerungsgerät für eine Zelle eines industriellen Automatisierungssystems ist zur Durchführung eines Verfahrens entsprechend vorangehenden Ausführungen ausgestaltet und eingerichtet und umfasst zumindest eine erste und eine zweiten Sende- und Empfangseinheit. Außerdem weist das Steuerungsgerät zumindest eine erste und eine zweite Steuerungseinheit zur Koordination eines Zugriffs auf ein Kommunikationsmedium, eine erste Vermittlungsfunktionseinheit zur Verarbeitung eines IPv4-Internetprotokollstapels und eine zweite Vermittlungsfunktionseinheit zur Verarbeitung eines IPv6-Internetprotokollstapels auf. Zusätzlich ist eine Namens- oder Konfigurationsdienstkomponente vorgesehen, die dafür ausgestaltet und eingerichtet ist, für eine von der Zelle umfasste Gruppe von Automatisierungsgeräten mit ausschließlich IPv4-basierten Kommunikationsgeräten innerhalb eines von der Zelle umfassten Teilnetzes IPv4-Adressen und zugeordnete Gerätenamen zu erfassen. Dabei ist das Steuerungsgerät dafür ausgestaltet und eingerichtet, mit dem Teilnetz verbundene Automatisierungsgeräte zu steuern bzw. zu überwachen.

Des weiteren umfasst das erfindungsgemäße Kommunikationsgerät eine Namensdienst-Steuerungseinheit, die dafür ausgestaltet und eingerichtet ist, für die Gruppe von Automatisierungsgeräten aus einem dem Teilnetz zugeordneten IPv6-Präfix und den IPv4-Adressen der Automatisierungsgeräte jeweils eine IPv6-Adresse zu berechnen. Ferner ist die Namensdienst-Steuerungseinheit dafür ausgestaltet und eingerichtet, für die Gruppe von Automatisierungsgeräten aus den IPv4-Adressen der Automatisierungsgeräte und den berechneten IPv6-Adressen Adressumsetzungsregeln zu ermitteln. Darüber hinaus ist ein Namensdienst-Agent vorgesehen, der dafür ausgestaltet und eingerichtet ist, für die Gruppe von Automatisierungsgeräten, die durch das Steuerungsgerät gesteuert bzw. überwacht werden, eine Erfassung der berechneten IPv6-Adressen und der zugeordneten Gerätenamen in zumindest einem übergeordneten Namensdienst-Server des industriellen Automatisierungssystems anzufordern. Zusätzlich umfasst das Steuerungsgerät eine Adressumsetzungseinheit, die dafür ausgestaltet und eingerichtet ist, die ermittelten Adressumsetzungsregeln für eine Adressumsetzung zwischen IPv4-Adressen und IPv6-Adressen anzuwenden. Die vorliegende Erfindung wird nahfolgend an einem Ausführungsbeispiel anhand der Zeichnung näher beschrieben. Es zeigt
- Figur 1: ein mehrere im wesentlichen IPv4-basierte Zellen umfassendes industrielles Automatisierungssystem mit einem Engineering-System, einem Leitsystem und einem DNS-Server,
- Figur 2: eine Detaildarstellung eines Controllers für eine Adressumsetzungseinheit.

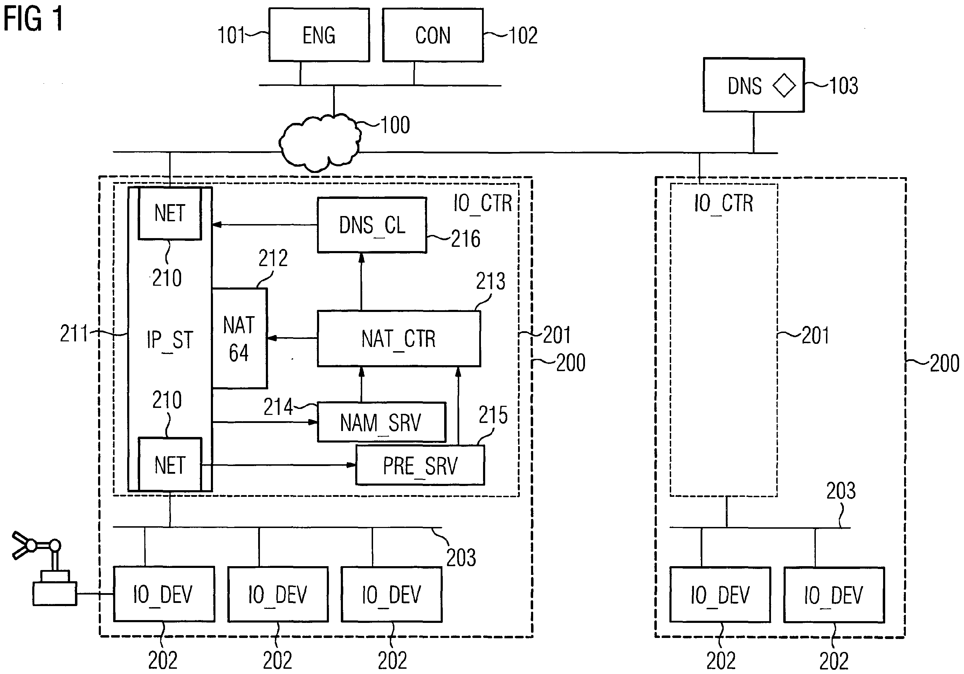

Das in Figur 1 dargestellte industrielle Automatisierungssystem umfasst ein Engineering-System 101 zur Projektierung von Automatisierungsgeräten, ein Leitsystem 102 zur deren Überwachung, einen DNS-Server (Domain Name System) 103 und mehrere gleichartige Zellen 200 mit jeweils einer Gruppe von Automatisierungsgeräten 202. Das Engineering-System 101, das Leitsystem 102 und der DNS-Server 103 sind über ein industrielles Kommunikationsnetz 100 miteinander verbunden, in dem Daten entsprechend IPv6 übermittelt werden.

Die Automatisierungsgeräte 202 sind im vorliegenden Ausführungsbeispiel Ein-/Ausgabeeinheiten, die jeweils mit einem zu steuernden bzw. überwachenden Gerät verbunden sind und ein integriertes Kommunikationsgerät umfassen, das ausschließlich IPv4-basiert ist. Neben den Ein-/Ausgabeeinheiten 202 umfassen die Zellen 200 jeweils ein Steuerungsgerät 201, das über ein Zell-individuelles Teilnetz 203 mit den Ein-/Ausgabeeinheiten 202 verbunden ist und diese steuert bzw. überwacht. Darüber hinaus verbinden die Steuerungsgeräte 201 die Zellen 200 mit dem IPv6-basierten industriellen Kommunikationsnetz 100 und umfassen hierzu einen integrierten Router, der eine kombinierte IP-Stack-Funktionseinheit 211 zur Verarbeitung eines IPv4-Stacks und eines IPv6-Stacks aufweist. Außerdem weisen die Steuerungsgeräte 201 jeweils einen ersten und einen zweiten Kommunikationsnetzadapter 210 auf, über die sie mit dem industriellen Kommunikationsnetz 100 bzw. mit dem jeweiligen Zell-individuellen Teilnetz 203 verbunden sind. Jeder Kommunikationsnetzadapter 210 umfasst eine durch eine PHY-Funktionseinheit realisierte Sende- und Empfangseinheit und eine durch eine MAC-Funktionseinheit realisierte Steuerungseinheit zur Koordination eines Zugriffs auf ein Kommunikationsmedium. Die IP-Stack-Funktionseinheiten 211 der Steuerungsgeräte 201 greifen jeweils über einen Kommunikationsnetzadapter-Treiber auf die Kommunikationsnetzadapter 210 zu.

Darüber hinaus umfassen die in die Steuerungsgeräte 201 integrierten Router jeweils eine Adressumsetzungseinheit 212, die für eine Adressumsetzung zwischen IPv4-Adressen und IPv6-Adressen vorgesehen ist. Zusätzlich weisen die Steuerungsgeräte 201 jeweils eine Namens- oder Konfigurationsdienstkomponente 214 auf, die innerhalb des jeweiligen Teilnetzes 203 IPv4-Adressen und zugeordnete Gerätenamen der Ein-/Ausgabeeinheiten 202 erfasst. Den Adressumsetzungseinheiten 212 ist jeweils ein adaptiver NAT64-Controller 213 (Network Address Translation) zugeordnet, der aus einem der jeweiligen Zelle 200 individuell zugeordneten IPv6-Präfix und den IPv4-Adressen der Ein-/Ausgabeeinheiten 202 jeweils eine virtuelle IPv6-Adresse berechnet. Für eine Bereitstellung zugeordneter IPv6-Präfixe an die NAT64-Controller 213 ist jeweils eine Präfix-Dienstkomponente 215 vorgesehen, die hierzu auf die Kommunikationsnetzadapter 210 zugreift. Aus den berechneten virtuellen IPv6-Adressen und den IPv4-Adressen der Ein-/Ausgabeeinheiten 202 ermittelt der jeweilige NAT64-Controller 213 für die Ein-/Ausgabeeinheiten 202 innerhalb seines Teilnetzes 203 Adressumsetzungsregeln, die durch die zugeordnete Adressumsetzungseinheit 212 angewendet werden.

Außerdem umfassen die Steuerungsgeräte 201 jeweils einen DNS -Client 216 für dynamisches DNS, der für die Ein-/Ausgabeeinheiten 202 seiner Zelle 200 eine Erfassung der berechneten virtuellen IPv6-Adressen und der zugeordneten Gerätenamen im DNS-Server 103 anfordert. Bei einer erfolgreichen Anforderung werden die berechneten IPv6-Adressen und die zugeordneten Gerätenamen im DNS-Server 103 gespeichert, der diese als Namensdienst insbesondere an DNS-Clients innerhalb des IPv6-basierten industriellen Kommunikationsnetzes 100 bereitstellt.

Die Namens- oder Konfigurationsdienstkomponente 214 kann als Namensdienstkomponente eines konfigurationslosen Namensdienstes ausgestaltet sein und IPv4-Adressen sowie zugeordnete Gerätenamen der jeweiligen Ein-/Ausgabeeinheiten 202 entsprechend einem Namensauflösungsprotokoll erfassen. Beispielsweise können die IPv4-Adressen und die zugeordneten Gerätenamen entsprechend Discovery and Configuration Protocol (DCP) oder multicast Domain Name System Protocol (mDNS) erfasst werden. Entsprechend einer alternativen Ausführungsform kann die Namens- oder Konfigurationsdienstkomponente 214 als Konfigurationsdienstkomponente ausgestaltet sein und Gerätenamen der jeweiligen Ein-/Ausgabeeinheiten 202 entsprechend Dynamic Host Control Protocol (DHCP), Version 4, Option 61 mittels eines jeweils Kommunikationsgerätseitig spezifizierten DHCP Client Identifier erfasst. Wenn durch eine DHCP- Konfigurationsdienstkomponente IPv4-Adressen für die Ein-/Ausgabeeinheiten 202 vergeben werden, liegen in diesem Fall entsprechende Adressinformationen dort bereits vor und brauchen nicht gesondert abgefragt zu werden.

Zur Berechnung einer jeweiligen virtuellen IPv6-Adresse wird vorzugsweise jeweils ein Schnittstellenidentifikator gebildet, dessen oberste 32 Bit einen einstellbaren Wert aufweisen und dessen unterste 32 Bit aus der jeweiligen IPv4-Adresse gebildet werden. Auf diese Weise wird eine Kollision mit per Stateless Address Autoconfiguration (SLAAC) aus MAC-Adressen gebildeten IPv6-Adressen vermieden, wenn zusätzlich IPv6-basierte Automatisierungs- bzw. Kommunikationsgeräte in den Zellen betrieben werden. Somit ermöglicht beschriebene Berechnung virtueller IPv6-Adressen einen Parallelbetrieb von IPv4-basierten Geräten, für die beschriebene Adressumsetzung durchgeführt wird, mit IPv6-basierten Automatisierungs- bzw. Kommunikationsgeräten. Dies gilt insbesondere auch bei Verwendung eines gemeinsamen Präfixes für IPv4- und IPv6-basierte Geräte.

Eine Adressumsetzung muss außerdem nicht für jedes IPv4-basierte Gerät einzeln aktiviert werden, sondern sie kann stattdessen für sämtliche IPv4-basierten Geräte innerhalb einer Zelle bzw. eines Teilnetzes veranlasst werden. Dies ermöglicht eine signifikante Reduktion der Anzahl der durch die jeweilige Adressumsetzungseinheit 212 anzuwendenden Adressumsetzungsregeln. Vorteilhafterweise ist jeder Zelle 200 ein spezielles IPv6-Präfix zugeordnet, das nur für aus IPv4-Adressen berechnete virtuelle IPv6-Adressen verwendet wird und ein off-link Präfix ist. Link-lokale bzw. on-link Präfixe sind dagegen bei einer Berechnung von virtuellen IPv6-Adressen aus IPv4-Adressen ausgeschlossen.

Insbesondere durch den adaptiven NAT64-Controller 213 ist sichergestellt, dass selbst bei identisch in Serie installierten Zellen 200 allen Ein-/ Ausgabeeinheiten 202 mit identischer IPv4-Adresse voneinander unterscheidbare virtuelle IPv6-Adressen zugeordnet werden. Den Zellen 200 sind hierzu nämlich unterschiedliche IPv6-Präfixe zugeordnet. Diese IPv6-Präfixe können insbesondere mittels Prefix Delegation (PD) entsprechend IETF, RFC 6147 automatisiert an die Subnetze darstellenden Zellen 200 zugewiesen werden.

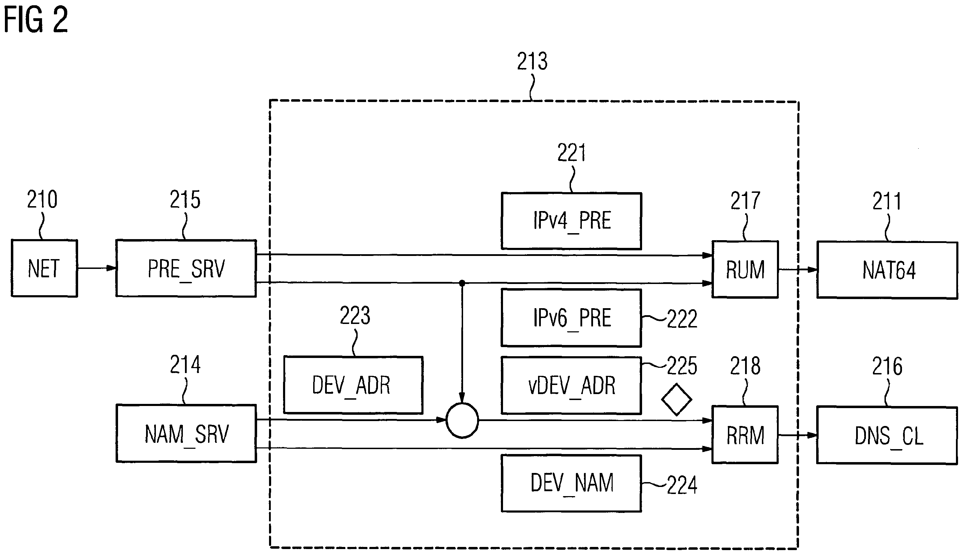

Der adaptive NAT64-Controller 213 berechnet Adressen neu, sobald sich Gerätenamen ändern, etwa durch Erlöschen oder Hinzufügen, bzw. sobald sich Präfixe ändern. Wie in Figur 2 veranschaulicht, stellt die Präfix-Dienstkomponente 215 hierzu jeweils aktuelle IPv4-Präfixinformationen 221 und IPv6-Präfixinformationen 222 an den adaptiven NAT64-Controller 213 bereit. Zusätzlich übermittelt die Namens- oder Konfigurationsdienstkomponente 214 IPv4-Adressinformationen 223 und Gerätenamensangaben 224 an den adaptiven NAT64-Controller 213. Mittels seines Rule Managers 217 steuert der adaptive NAT64-Controller 213 die zugeordnete Adressumsetzungseinheit 211 dementsprechend an. Der Rule Manager 217 generiert jeweils benötigte Regeln für die Adressumsetzung und löscht außerdem veraltete Regeln.

Mit Hilfe seines Resource Record Managers 218 steuert der adaptive NAT64-Controller den jeweiligen DDNS-Client 216 an. Der Resource Record Manager 218 kontrolliert, dass AAAA Resource Records zu berechneten virtuellen IPv6-Adressen 225 im DNS-Server 103 registriert, aktualisiert bzw. gelöscht werden. Darüber hinaus behandelt der Resource Record Manager auch eventuelle Fehler bei der Registrierung oder Deregistrierung von Resource Records in DNS-Servern.

Anhand im DNS-Server 103 verzeichneter Gerätenamen können IPv6-basierte Geräte die virtuellen IPv6-Adressen 225 der Ein-/Ausgabeinheiten 202 abfragen, um auf diese eindeutig zuzugreifen. Die virtuellen IPv6-Adressen 225 werden für Anwender und Anwendungen unsichtbar in den Steuerungsgeräten 201 per NAT64 auf IPv4-Adressen für eine durchgängige Kommunikation umgesetzt.

## Patentansprüche

1. Verfahren zur Datenübermittlung innerhalb eines industriellen Automatisierungssystems, bei dem
- das industrielle Automatisierungssystem mehrere Zellen (200) mit jeweils einer Gruppe von ausschließlich IPv4-basierte Kommunikationsgeräte umfassenden Automatisierungsgeräten (202) und jeweils einem Teilnetz-Steuerungsgerät (201) umfasst, wobei das Teilnetz-Steuerungsgerät (201) über ein Zell-individuelles Teilnetz (203) mit den Automatisierungsgeräten (202) verbunden ist und diese steuert und/oder überwacht,
- eine Namens- oder Konfigurationsdienstkomponente (214) des Teilnetz-Steuerungsgeräts (201) für die Gruppe von Automatisierungsgeräten (202) IPv4-Adressen und zugeordnete Gerätenamen erfasst,
- das Teilnetz-Steuerungsgerät (201) für die Gruppe von Automatisierungsgeräten (202) aus einem dem Teilnetz (203) zugeordneten IPv6-Präfix und den IPv4-Adressen der Automatisierungsgeräten jeweils eine IPv6-Adresse berechnet,
- ein Namensdienst-Agent (216) des Teilnetz-Steuerungsgeräts (201) für die Gruppe von durch das Teilnetz-Steuerungsgerät gesteuerten und/oder überwachten Automatisierungsgeräten (202) eine Erfassung der berechneten IPv6-Adressen und der zugeordneten Gerätenamen in zumindest einem übergeordneten Namensdienst-Server (103) des industriellen Automatisierungssystems anfordert,
- die berechneten IPv6-Adressen und die zugeordneten Gerätenamen bei einer erfolgreichen Anforderung im übergeordneten Namensdienst-Server (103) gespeichert werden,
- für die Gruppe von Automatisierungsgeräten (202) aus den IPv4-Adressen der Automatisierungsgeräten und den berechneten IPv6-Adressen Adressumsetzungsregeln ermittelt werden,
- die ermittelten Adressumsetzungsregeln durch eine Adressumsetzungseinheit (212) des Teilnetz-Steuerungsgeräts (201) für eine Adressumsetzung zwischen IPv4-Adressen und IPv6-Adressen angewendet werden.

2. Verfahren nach Anspruch 1,
bei dem das Teilnetz-Steuerungsgerät eine Namensdienstkomponente eines konfigurationslosen Namensdienstes umfasst, und bei dem die Namensdienstkomponente des Teilnetz-Steuerungsgeräts für die Gruppe von Automatisierungsgeräten IPv4-Adressen und zugeordnete Gerätenamen entsprechend einem Namensauflösungsprotokoll erfasst, und bei dem die IPv4-Adressen und die zugeordneten Gerätenamen für die Gruppe von Automatisierungsgeräten durch die Namensdienstkomponente des Teilnetz-Steuerungsgeräts entsprechend Discovery and Configuration Protocol oder multicast Domain Name System Protocol erfasst werden.

3. Verfahren nach Anspruch 1,
bei dem das Teilnetz-Steuerungsgerät eine Konfigurationsdienstkomponente umfasst, und bei dem die Konfigurationsdienstkomponente des Teilnetz-Steuerungsgeräts Gerätenamen entsprechend Dynamic Host Control Protocol, Version 4, Option 61 mittels eines jeweils Automatisierungsgerät-seitig spezifizierten DHCP Client Identifier erfasst.

4. Verfahren nach einem der Ansprüche 1 bis 3,
bei dem eine IPv6-Adresse aus einem zum Teilnetz zugeordneten IPv6-Präfix und einer IPv4-Adresse jeweils nur für Automatisierungsgeräte berechnet wird, die jeweils eine Vermittlungsfunktionseinheit aufweisen, die nur zur Verarbeitung eines IPv4-Internetprotokollstapels ausgestaltet und eingerichtet ist.

5. Verfahren nach Anspruch 4,
bei dem zur Berechnung einer jeweiligen IPv6-Adresse jeweils ein Schnittstellenidentifikator gebildet wird, dessen oberste 32 Bit einen einstellbaren Wert aufweisen und dessen unterste 32 Bit aus der jeweiligen IPv4-Adresse gebildet werden.

6. Verfahren nach einem der Ansprüche 4 oder 5,
bei dem das Teilnetz ein separates zugeordnetes IPv6-Präfix aufweist, das nur für aus IPv4-Adressen berechnete IPv6-Adressen verwendet wird.

7. Verfahren nach einem der Ansprüche 1 bis 6,
bei dem das dem Teilnetz für eine Berechnung von IPv6-Adressen aus IPv4-Adressen zugeordnete IPv6-Präfix ein off-link Präfix ist.

8. Verfahren nach Anspruch 7,
bei dem Link-lokale Präfixe bei einer Berechnung von IPv6-Adressen aus IPv4-Adressen ausgeschlossen sind.

9. Verfahren nach einem der Ansprüche 1 bis 8,
bei dem jeder Zelle zumindest ein individuelles IPv6-Präfix zugeordnet ist.

10. Verfahren nach einem der Ansprüche 1 bis 9,
bei dem der übergeordnete Namensdienst-Server ein Domain Name System Server ist, der einen Namensdienst an DNS-Clients von IPv6-basierten Kommunikationsgeräten bereitstellt.

11. Verfahren nach einem der Ansprüche 1 bis 10,
bei dem der Namensdienst-Agent einen Client für dynamisches DNS umfasst, mittels dessen eine Speicherung einer Zuordnung von aus IPv4-Adressen berechneten IPv6-Adressen und zugeordneten Gerätenamen im übergeordneten Namensdienst-Server anfordert wird.

12. Verfahren nach einem der Ansprüche 1 bis 11,
bei dem die Adressumsetzungseinheit in einen Router integriert ist, der eine erste Vermittlungsfunktionseinheit zur Verarbeitung eines IPv4-Internetprotokollstapels und eine zweite Vermittlungsfunktionseinheit zur Verarbeitung eines IPv6-Internetprotokollstapels aufweist.

13. Verfahren nach Anspruch 12,
bei dem jede Vermittlungsfunktionseinheit über einen Kommunikationsnetzadapter-Treiber auf einen Kommunikationsnetzadapter eines Teilnetz-Steuerungsgeräts zugreift, und bei dem jeder Kommunikationsnetzadapter eine Sende- und Empfangseinheit und eine Steuerungseinheit zur Koordination eines Zugriffs auf ein Kommunikationsmedium umfasst.

14. Verfahren nach Anspruch 13,
bei dem das Teilnetz-Steuerungsgerät den Namensdienst-Agenten und den Router mit integrierter Adressumsetzungseinheit umfasst, und bei dem das Teilnetz-Steuerungsgerät über einen ersten Kommunikationsnetzadapter mit der Gruppe von Kommunikationsgeräten innerhalb seines Teilnetzes verbunden ist, und bei dem das Teilnetz-Steuerungsgerät über einen zweiten Kommunikationsnetzadapter mit dem übergeordneten Namensdienst-Server verbunden ist.

15. Steuerungsgerät für eine Zelle eines industriellen Automatisierungssystems zur Durchführung eines Verfahrens nach einem der Ansprüche 1 bis 14 mit
- zumindest einer ersten und einer zweiten Sende- und Empfangseinheit,
- zumindest einer ersten und einer zweiten Steuerungseinheit zur Koordination eines Zugriffs auf ein Kommunikationsmedium,
- einer ersten Vermittlungsfunktionseinheit zur Verarbeitung eines IPv4-Internetprotokollstapels,
- einer zweiten Vermittlungsfunktionseinheit zur Verarbeitung eines IPv6-Internetprotokollstapels,
- einer Namens- oder Konfigurationsdienstkomponente (214), die dafür ausgestaltet und eingerichtet ist, für eine von der Zelle (200) umfasste Gruppe von Automatisierungsgeräten (202) mit ausschließlich IPv4-basierten Kommunikationsgeräten innerhalb eines von der Zelle umfassten Teilnetzes (203) IPv4-Adressen und zugeordnete Gerätenamen zu erfassen, wobei das Steuerungsgerät (201) dafür ausgestaltet und eingerichtet ist, mit dem Teilnetz verbundene Automatisierungsgeräte zu steuern und/oder zu überwachen,
- einer Teilnetz-Steuerungsgerät (201), die dafür ausgestaltet und eingerichtet ist, für die Gruppe von Automatisierungsgeräten aus einem dem Teilnetz zugeordneten IPv6-Präfix und den IPv4-Adressen der Automatisierungsgeräte jeweils eine IPv6-Adresse zu berechnen, wobei die Teilnetz-Steuerungsgerät (201) ferner dafür ausgestaltet und eingerichtet ist, für die Gruppe von Automatisierungsgeräten aus den IPv4-Adressen der Automatisierungsgeräte und den berechneten IPv6-Adressen Adressumsetzungsregeln zu ermitteln,
- einem Namensdienst -Agenten (216), der dafür ausgestaltet und eingerichtet ist, für die Gruppe von durch das Steuerungsgerät gesteuerten und/oder überwachten Automatisierungsgeräten eine Erfassung der berechneten IPv6-Adressen und der zugeordneten Gerätenamen in zumindest einem übergeordneten Namensdienst-Server des industriellen Automatisierungssystems anzufordern,
- einer Adressumsetzungseinheit (212), die dafür ausgestaltet und eingerichtet ist, die ermittelten Adressumsetzungsregeln für eine Adressumsetzung zwischen IPv4-Adressen und IPv6-Adressen anzuwenden.

## Claims

1. Method for transmitting data inside an industrial automation system, in which
- the industrial automation system comprises a plurality of cells (200) having in each case a group of automation devices (202) comprising exclusively IPv4-based communication devices and in each case a subnetwork control device (201), wherein the subnetwork control device (201) is connected to the automation devices (202) via a cell-specific subnetwork (203) and controls and/or monitors said automation devices,
- a name or configuration service component (214) of the subnetwork control device (201) acquires IPv4 addresses and associated device names for the group of automation devices (202),
- the subnetwork control device (201) respectively calculates an IPv6 address for the group of automation devices (202) from an IPv6 prefix assigned to the subnetwork (203) and the IPv4 addresses of the automation devices,
- a name service agent (216) of the subnetwork control device (201) requests acquisition of the calculated IPv6 addresses and the associated device names for the group of automation devices (202) which are controlled and/or monitored by the subnetwork control device in at least one superordinate name service server (103) of the industrial automation system,
- the calculated IPv6 addresses and the associated device names are stored in the superordinate name service server (103) in the event of a successful request,
- address translation rules are determined for the group of automation devices (202) from the IPv4 addresses of the automation devices and the calculated IPv6 addresses,
- the determined address translation rules are used for address translation between IPv4 addresses and IPv6 addresses by an address translation unit (212) of the subnetwork control device (201).

2. Method according to Claim 1,
in which the subnetwork control device comprises a name service component of a zero-configuration name service, and in which the name service component of the subnetwork control device acquires IPv4 addresses and associated device names for the group of automation devices in accordance with a name resolution protocol, and in which the IPv4 addresses and the associated device names for the group of automation devices are acquired by the name service component of the subnetwork control device in accordance with a Discovery and Configuration Protocol or a multicast Domain Name System Protocol.

3. Method according to Claim 1,
in which the subnetwork control device comprises a configuration service component, and in which the configuration service component of the subnetwork control device acquires device names in accordance with the Dynamic Host Control Protocol, version 4, option 61 using a DHCP client identifier respectively specified in the automation device.

4. Method according to one of Claims 1 to 3,
in which an IPv6 address is respectively calculated from an IPv6 prefix assigned to the subnetwork and an IPv4 address only for automation devices each having a switching functional unit which is configured and set up only to process an IPv4 Internet protocol stack.

5. Method according to Claim 4,
in which an interface identifier is respectively formed in order to calculate a respective IPv6 address, the uppermost 32 bits of which identifier have an adjustable value and the lowermost 32 bits of which are formed from the respective IPv4 address.

6. Method according to either of Claims 4 and 5,
in which the subnetwork has a separate associated IPv6 prefix which is used only for IPv6 addresses calculated from IPv4 addresses.

7. Method according to one of Claims 1 to 6,
in which the IPv6 prefix assigned to the subnetwork for calculating IPv6 addresses from IPv4 addresses is an off-link prefix.

8. Method according to Claim 7,
in which link-local prefixes are excluded when calculating IPv6 addresses from IPv4 addresses.

9. Method according to one of Claims 1 to 8,
in which at least one individual IPv6 prefix is assigned to each cell.

10. Method according to one of Claims 1 to 9,
in which the superordinate name service server is a Domain Name System server which provides DNS clients of IPv6-based communication devices with a name service.

11. Method according to one of Claims 1 to 10,
in which the name service agent comprises a client for dynamic DNS, by means of which storage of an assignment of IPv6 addresses calculated from IPv4 addresses and associated device names in the superordinate name service server is requested.

12. Method according to one of Claims 1 to 11,
in which the address translation unit is integrated in a router which has a first switching functional unit for processing an IPv4 Internet protocol stack and a second switching functional unit for processing an IPv6 Internet protocol stack.

13. Method according to Claim 12,
in which each switching functional unit accesses a communication network adapter of a subnetwork control device via a communication network adapter driver, and in which each communication network adapter comprises a transmitting and receiving unit and a control unit for coordinating access to a communication medium.

14. Method according to Claim 13,
in which the subnetwork control device comprises the name service agent and the router with the integrated address translation unit, and in which the subnetwork control device is connected to the group of communication devices inside its subnetwork via a first communication network adapter, and in which the subnetwork control device is connected to the superordinate name service server via a second communication network adapter.

15. Control device for a cell of an industrial automation system for carrying out a method according to one of Claims 1 to 14, having
- at least one first and one second transmitting and receiving unit,
- at least one first and one second control unit for coordinating access to a communication medium,
- a first switching functional unit for processing an IPv4 Internet protocol stack,
- a second switching functional unit for processing an IPv6 Internet protocol stack,
- a name or configuration service component (214) which is configured and set up to acquire IPv4 addresses and associated device names for a group of automation devices (202) comprised by the cell (200), having exclusively IPv4-based communication devices inside a subnetwork (203) comprised by the cell, wherein the control device (201) is configured and set up to control and/or to monitor automation devices which are connected to the subnetwork,
- a subnetwork control device (201) which is configured and set up to respectively calculate an IPv6 address for the group of automation devices from an IPv6 prefix assigned to the subnetwork and the IPv4 addresses of the automation devices, the subnetwork control device (201) also being configured and set up to determine address translation rules for the group of automation devices from the IPv4 addresses of the automation devices and the calculated IPv6 addresses,
- a name service agent (216) which is configured and set up to request acquisition of the calculated IPv6 addresses and the associated device names for the group of automation devices which are controlled and/or monitored by the control device in at least one superordinate name service server of the industrial automation system,
- an address translation unit (212) which is configured and set up to use the determined address translation rules for address translation between IPv4 addresses and IPv6 addresses.

## Revendications

1. Procédé de transmission de données dans un système d'automatisation industriel, dans lequel
- le système d'automatisation industriel comprend plusieurs cellules (200) ayant chacune un groupe d'appareils (202) d'automatisation comprenant des appareils de communication reposant exclusivement sur IPv4 et chacune un appareil (201) de commande de sous-réseau, l'appareil (201) de commande de sous-réseau étant relié aux appareils (202) d'automatisation par un sous-réseau (203) individuel à la cellule et les commandant et/ou les contrôlant,
- un composant (214) de service de dénomination ou de configuration de l'appareil (201) de commande du sous-réseau pour le groupe d'appareils (202) d'automatisation détectant des adresses d'IPv4 et des dénominations d'appareils associées,
- l'appareil (201) de commande de sous-réseau calcule, pour le groupe d'appareils (202) d'automatisation, respectivement une adresse d'IPv6, à partir d'un préfixe d'IPv6 associé au sous-réseau (203) et des adresses d'IPv4 des appareils d'automatisation,
- un agent (216) de service de dénomination de l'appareil (201) de commande de sous-réseau demande, pour le groupe d'appareils (202) d'automatisation commandés et/ou contrôlés par l'appareil de commande de sous-réseau, une détection des adresses d'IPv6 calculées et des dénominations d'appareils associées dans au moins un serveur (103) de service de dénomination supérieur hiérarchiquement du système d'automatisation industriel,
- on mémorise les adresses d'IPv6 calculées et les dénominations d'appareils associées, si la demande est couronnée de succès, dans le serveur de service de dénomination supérieur hiérarchiquement,
- on détermine, pour le groupe d'appareils (202) d'automatisation, des règles de changement d'adresse à partir des adresses d'IPv4 des appareils d'automatisation et des adresses d'IPv6 calculées,
- on applique les règles d'un changement d'adresse, déterminées par une unité (212) de changement d'adresse de l'appareil (201) de commande de sous-réseau, à un changement d'adresse entre des adresses d'IPv4 et des adresses d'IPv6.

2. Procédé suivant la revendication 1,
dans lequel l'appareil de commande de sous-réseau comprend un composant de service de dénomination d'un service de dénomination sans configuration, et dans lequel le composant de service de dénomination de l'appareil de commande de sous-réseau détecte, conformément à un protocole de résolution de dénomination, pour le groupe d'appareils d'automatisation, des adresses d'IPv4 et des dénominations d'appareils associées, et dans lequel on détecte, conformément à Discovery and Configuration Protocol ou à Multicast Domain Name System Protocol par le composant de service de dénomination de l'appareil de commande de sous-réseau, les adresses d'IPv4 et les dénominations d'appareils associées pour le groupe d'appareils d'automatisation.

3. Procédé suivant la revendication 1,
dans lequel l'appareil de commande de sous-réseau comprend un composant de service de configuration, et dans lequel le composant de service de configuration de l'appareil de commande de sous-réseau détecte des dénominations d'appareils, conformément à Dynamic Host Control Protocol, version 4, option 61, au moyen d'un identificateur de client DHCP spécifié respectivement du côté de l'appareil d'automatisation.

4. Procédé suivant l'une des revendications 1 à 3,
dans lequel on calcule une adresse d'IPv6, à partir d'un préfixe d'IPv4 associé au sous-réseau et d'une adresse d'IPv4, respectivement seulement pour des appareils d'automatisation, qui ont chacun une unité fonctionnelle de commutation, qui n'est conformée et conçue que pour le traitement d'une pile de protocol Internet d'IPv4.

5. Procédé suivant la revendication 4,
dans lequel, pour le calcul d'une adresse d'IPv6 respective, on forme respectivement un identificateur d'interface, dont les 32 bits les plus hauts, ont une valeur réglable et dont les 32 bits les plus bas, sont formés à partir de l'adresse d'IPv4 respective.

6. Procédé suivant l'une des revendications 4 ou 5,
dans lequel le sous-réseau a un préfixe d'IPv6 associé distinct, qui n'est utilisé que pour des adresses d'IPv6 calculées à partir d'adresses d'IPv4.

7. Procédé suivant l'une des revendications 1 à 6,
dans lequel le préfixe d'IPv6, associé au sous-réseau pour un calcul d'adresses d'IPv6 à partir d'adresses d'IPv4, est un préfixe off-link.

8. Procédé suivant la revendication 7,
dans lequel des préfixes link-locaux sont exclus lors d'un calcul d'adresses d'IPv6 à partir d'adresses d'IPv4.

9. Procédé suivant l'une des revendications 1 à 8,
dans lequel, à chaque cellule, est associé au moins un préfixe d'IPv6 individuel.

10. Procédé suivant l'une des revendications 1 à 9,
dans lequel le serveur de service de dénominations supérieur hiérarchiquement est un serveur Domain Name System, qui met un service de dénomination à disposition de clients DNS d'appareils de communication reposant sur IPv6.

11. Procédé suivant l'une des revendications 1 à 10,
dans lequel l'agent de service de dénominations comprend un client pour un DNS dynamique, au moyen duquel une mémorisation d'une association d'adresses d'IPv6? calculées à partir d'adresses d'IPv4 et de dénominations d'appareils associées est demandéE dans le serveur de service de dénomination supérieur hiérarchiquement.

12. Procédé suivant l'une des revendications 1 à 11,
dans lequel l'unité de changement d'adresse est intégré dans un routeur, qui a une première unité fonctionnelle de commutation pour le traitement d'une pile de protocol Internet d'IPv4 et une deuxième unité fonctionnelle de commutation pour le traitement d'une pile de protocol Internet d'IPv6.

13. Procédé suivant la revendication 12,
dans lequel chaque unité fonctionnelle de commutation accède, par un circuit d'attaque d'adaptateur de réseau de communication, à un adaptateur de réseau de communication d'un appareil de commande de sous-réseau, et dans lequel l'adaptateur de réseau de communication comprend une unité d'émission et de réception et une unité de commande pour coordonner un accès à un support de communication.

14. Procédé suivant la revendication 13,
dans lequel l'appareil de commande de sous-réseau comprend l'agent de service de dénomination et le routeur ayant une unité de changement d'adresse intégré, et dans lequel l'appareil de commande de sous-réseau est relié par un premier adaptateur de réseau de communication au groupe d'appareils de communication dans son sous-réseau, et dans lequel l'appareil de commande de sous-réseau est relié au serveur de service de dénomination supérieur hiérarchiquement par un deuxième adaptateur de réseau de communication.

15. Appareil de commande pour une cellule d'un système d'automatisation industriel pour effectuer un procédé suivant l'une des revendications 1 à 14, comprenant
- au moins une première et une deuxième unités d'émission et de réception,
- au moins une première et une deuxième unités de commande pour coordonner un accès à un support de communication,
- une première unité fonctionnelle de commutation pour traiter une pile de protocol Internet d'IPv4,
- une deuxième unité fonctionnelle de commutation pour traiter une pile de protocol Internet d'IPv6,
- un composant (214) de service de dénomination et de configuration, qui est conformé et conçu pour détecter, pour un groupe, englobé par la cellule (200), d'appareils (202) d'automatisation ayant des appareils de communication reposant exclusivement sur IPv4, dans un sous-réseau (203) englobé par la cellule, des adresses d'IPv4 et des dénominations d'appareils associées, l'appareil (201) de commande étant conformé et conçu pour commander et/ou contrôler des appareils d'automatisation reliés au sous-réseau,
- un appareil (201) de commande de sous-réseau, qui est conformé et conçu pour calculer, pour le groupe d'appareils d'automatisation, respectivement une adresse d'IPv6 à partir d'un préfixe d'IPv6 associé au sous-réseau et des adresses d'IPv4 des appareils d'automatisation, l'appareil (201) de commande de sous-réseau étant conformé et conçu, en outre, pour déterminer, pour le groupe d'appareils d'automatisation, des règles de changement d'adresse à partir des adresses d'IPv4 des appareils d'automatisation et des adresses d'IPv6 calculées,
- un agent (216) de service de dénomination, qui est conformé et conçu pour demander, dans un serveur de service de dénominations supérieur hiérarchiquement du système d'automatisation industriel pour le groupe d'appareils d'automatisation commandés et/ou contrôlés par l'appareil de commande, une détection des adresses d'IPv6 calculées et des dénominations d'appareils associées,
- une unité (212) de changement d'adresse conformée et conçue pour appliquer les règles de changement d'adresse déterminées pour un changement d'adresse en des adresses d'IPv4 et des adresses d'IPv6.
